# EUROPEAN PATENT SPECIFICATION

(11) **EP 3 242 203 B1**
(45) Date of publication and mention of the grant of the patent: **19.06.2024**
(21) Application number: 17159829.5
(22) Date of filing: 08.03.2017
(51) Int. Cl.: G06F 9/451, G06F 16/9535

(54) **METHOD FOR OPERATING A DISPLAY DEVICE AND DISPLAY DEVICE**
VERFAHREN ZUM BETRIEB EINER ANZEIGEVORRICHTUNG UND ANZEIGEVORRICHTUNG
PROCÉDÉ DE FONCTIONNEMENT D'UN AFFICHEUR ET AFFICHEUR

(30) Priority: 29.04.2016 CN 201610285269
(43) Date of publication of application: 08.11.2017
(73) Proprietor: Beijing Xiaomi Mobile Software Co., Ltd., Beijing 100085 (CN)
(72) Inventor: KANG, Shangmingxue, Beijing, Beijing 100085 (CN); LIU, Fang, Beijing, Beijing 100085 (CN); ZHANG, Peng, Beijing, Beijing 100085 (CN)
(74) Representative: dompatent von Kreisler Selting Werner - Partnerschaft von Patent- und Rechtsanwälten mbB

(56) References cited:
- Conner Carey: "How to Use the New, Improved Spotlight Search", iPhoneLife.com , 22 April 2016 (2016-04-22), XP055406118, Retrieved from the Internet: URL:https://www.iphonelife.com/content/how -use-new-improved-spotlight-feature-ios-9 [retrieved on 2017-09-13]
- MacRumors: "Here's a look at iOS 9's new 'Proactive' Search and Siri features", YouTube , 15 June 2015 (2015-06-15), XP054977719, Retrieved from the Internet: URL:https://www.youtube.com/watch?v=7ZxjsX M_Qso [retrieved on 2017-09-11]
- Richard Forsythe: "Spotlight Search on IOS9 Explained-Toptal: Demistifying iOS 9 Spotlight Search for Developers", toptal , 9 December 2015 (2015-12-09), page 8PP, XP002773714, Retrieved from the Internet: URL:https://www.toptal.com/ios/ios-9-spotl ight-search-for-developers [retrieved on 2017-09-13]
- Anonymous: "Introduction to Proactive Suggestions", Xamarin , 15 April 2015 (2015-04-15), page 24PP, XP002773715, Retrieved from the Internet: URL:https://developer.xamarin.com/guides/i os/platform_features/search/proactive-sugg estions/ [retrieved on 2017-09-13]
- Joshua Huerkamp: "iOS 9 Tutorial Series: Search API", , 15 September 2015 (2015-09-15), page 3PP, XP055405896, Retrieved from the Internet: URL:https://www.captechconsulting.com/blog s/ios-9-tutorial-series-search-api [retrieved on 2017-09-12]
- Macworld Uk: "How to use Proactive in iOS 9: New iOS 9 feature for iPhone & iPad", , 19 June 2015 (2015-06-19), XP055916305, Retrieved from the Internet: URL:https://www.youtube.com/watch?v=BtTfGA 3uWRw [retrieved on 2022-04-28]
- Gizmodo: "Apple iOS 9 Proactive Intelligence Demo at WWDC 2015", , 8 June 2015 (2015-06-08), XP055916324, Retrieved from the Internet: URL:https://www.youtube.com/watch?v=aUse2m r-QOo [retrieved on 2022-04-28]
- Emily Grossman: "App Indexing & The New Frontier of SEO: Apple Search + iOS App Indexing", , 6 July 2015 (2015-07-06), pages 1-14, XP055864392, Retrieved from the Internet: URL:https://searchengineland.com/app-index ing-new-frontier-seo-apple-search-ios-app- indexing-223880 [retrieved on 2021-11-23]

## Description

### TECHNICAL FIELD

The present disclosure generally relates to an information display method, an information display device, a computer program and a recording medium readable by a computer.

### BACKGROUND

Terminals tend to be developed into close assistants of people, and may know patterns of life and preferences of people so as to provide valuable service for users at the right time.

A method for operating a display device provided by a related technology includes that: a terminal records an application which is used by a user at a relatively higher frequency, and displays the application on a specific desktop for the user to directly start the application on the specific desktop.

Conner Carey: "How to Use the New, Improved Spotlight Search",iPhoneLife.com, 22 April 2016 (2016-04-22), Retrieved from the Internet:URL:https://www.iphonelife.com/content/how-use-new-improved-spotlight-feature-ios-9 [retrieved on 2017-09-13] discloses an introduction to Spotlight in iOS 9.

MacRumors: "Here's a look at iOS 9's new 'Proactive' Search and Siri features",YouTube, 15 June 2015 (2015-06-15),Retrieved from the Internet:URL:https://www.youtube.com/watch? v=7ZxjsXM_Qso [retrieved on 2017-09-11] discloses iOS 9 new "Proactive" search and SIRI features.

Richard Forsythe: "Spotlight Search on IOS9 Explained-Toptal: Demistifying iOS 9 Spotlight Search for Developers",toptal, 9 December 2015 (2015-12-09), page 8PP, Retrieved from the Internet:URL:https://www.toptal.com/ios/ios-9-spotlight-search-for-developers [retrieved on 2017-09-13] discloses the CoreSpotlight Framework in iOS 9.

2. "Introduction to Proactive Suggestions", Xamarin, 15 April 2015 (2015-04-15), page 24PP, Retrieved from the Internet:URL:https://developer.xamarin.com/guides/ios/platform_features/search/proactive-suggestions/ [retrieved on 2017-09-13] discloses an introduction to proactive suggestions.
"App Indexing & The New Frontier of SEO: Apple Search + iOS App Indexing",, 6 July 2015 (2015-07-06), pages 1-14, XP055864392,Retrieved from the Internet:URL:https://searchengineland.com/app-indexing-new-frontier-seo-apple-search-ios-app-indexing-223880 [retrieved on 2021-11-23] discloses indexing mechanism in iOS.

### SUMMARY

Accordingly, the present disclosure provides an information display method, an information display device, a computer program and a recording medium readable by a computer. The present invention is set out in the appended set of claims. Any embodiment in the description that does not fall within the scope of the claims shall be regarded as an example for understanding the present invention.

A preset operation configured to indicate the terminal to display the preset desktop page is received; the parameter of the environment where the terminal is located is acquired; the service to be called by the user is predicted according to the parameter; the information of the service is displayed in the preset desktop page. Therefore, the phenomenon that the same service is continuously recommended to the user stiffly according to a using frequency may be avoided, the service which may be called by the user at this moment may be actively recommended to the user according to a using habit of the user instead, the problem of recommendation inaccuracy of continuous recommendation of the same service to the user according to the using frequency due to the fact that the user may call different service at different times is solved, and an effect of improving accuracy of the recommended service is achieved.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It should be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart showing an method for operating a display device according to an exemplary embodiment.
Fig. 2A is a flow chart showing an method for operating a display device according to another exemplary embodiment.
Fig. 2B is a flow chart showing a content acquisition method according to another exemplary embodiment.
Fig. 2C is a flow chart showing another content acquisition method according to another exemplary embodiment.
Fig. 2D is a schematic diagram illustrating a preset desktop page according to another exemplary embodiment.
Fig. 3 is a block diagram illustrating a display device according to an exemplary embodiment.
Fig. 4 is a block diagram illustrating a display device according to an exemplary embodiment.
Fig. 5 is a block diagram illustrating a display device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

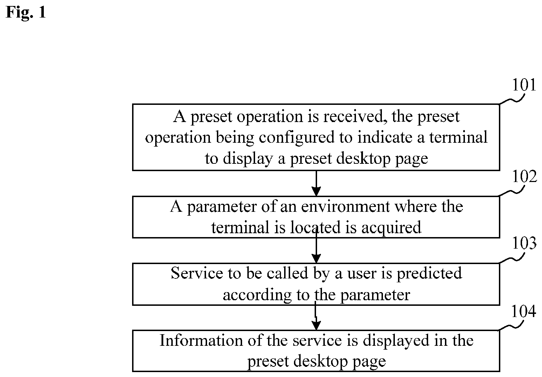

Fig. 1 is a flow chart showing a method for operating a display device according to an exemplary embodiment. The method for operating a display device is applied to a terminal, and as shown in Fig. 1, the method for operating a display device includes the following steps.

In Step 101, a preset operation is received, the preset operation being configured to indicate the terminal to display a preset desktop page.

In Step 102, a parameter of an environment where the terminal is located is acquired.

In Step 103, service to be called by a user is predicted according to the parameter.

In Step 104, information of the service is displayed in the preset desktop page.

The preset desktop page is a desktop which is created by the terminal and configured to display the service, while an ordinary desktop page is a desktop which is created by the terminal and configured to display an application icon. The preset desktop page is different from the ordinary desktop page. The preset desktop page may also be called a minus one screen.

The preset desktop page may be located on a left side or right side of the ordinary desktop page, and may also be located between multiple ordinary desktop pages. For example, in an implementation mode, the preset desktop page is located on the left side of the ordinary desktop page, and at this moment, the preset operation may be a rightward swipe operation. When the user executes the rightward swipe operation on a current ordinary desktop page, the terminal switches the current ordinary desktop page into an ordinary desktop page on its left side. The user continues executing the rightward swipe operation, and stops until the terminal switches the current ordinary desktop page into the preset desktop page on a leftmost side.

From the above, according to the method for operating a display device provided by the present disclosure, the preset operation configured to indicate the terminal to display the preset desktop page is received; the parameter of the environment where the terminal is located is acquired; the service to be called by the user is predicted according to the parameter; and the information of the service is displayed in the preset desktop page. Therefore, the phenomenon that the same service is continuously recommended to the user stiffly according to a using frequency may be avoided, the service which may be called by the user at this moment may be actively recommended to the user according to a using habit of the user instead, the problem of recommendation inaccuracy of continuous recommendation of the same service to the user according to the using frequency due to the fact that the user may call different service at different times is solved, and an effect of improving accuracy of the recommended service is achieved.

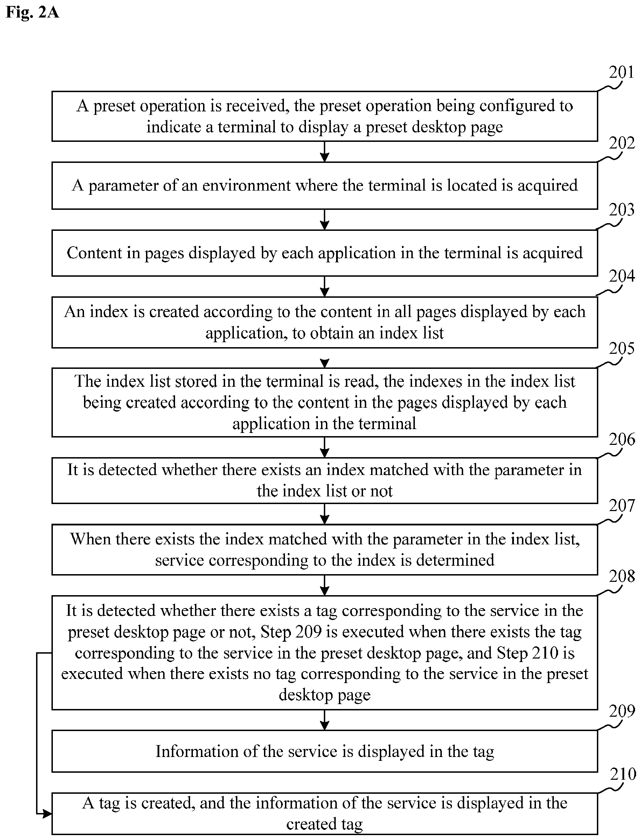

Fig. 2A is a flow chart showing a method for operating a display device according to another exemplary embodiment. As shown in Fig. 2A, the method for operating a display device includes the following steps.

In Step 201, a preset operation is received, the preset operation being configured to indicate a terminal to display a preset desktop page.

The preset operation is configured to indicate the terminal to display the preset desktop page. The preset operation may be triggered by an action on a physical key in the terminal, may also be triggered by an action on a virtual key in the terminal, may also be triggered by an action on both the physical key and the virtual key, and may further be triggered by execution of a preset gesture on a display screen or sensor of the terminal. There are no limits made in the embodiment.

In Step 202, a parameter of an environment where the terminal is located is acquired.

The parameter of the environment whether the terminal is currently located may include current time, location, brightness, temperature or the like, which is not limited in the embodiment.

In Step 203, content in page displayed by each application in the terminal are acquired.

The terminal acquires the content in all the pages displayed by all the applications. For example, the user reads news with the terminal in the morning, and an intelligent assistant acquires content of the news; the user plays a game with the terminal at noon, and the intelligent assistant acquires content of the game; the user sends a message with the terminal in the afternoon, and the intelligent assistant acquires content of the message; and the user watches a movie with the terminal in the evening, and the intelligent assistant acquires content of the movie. Herein, the intelligent assistant is configured to record and learn a using habit of the user, predict service to be called by the user according to the using habit of the user, and actively provide the predicted service for a system-level application of the user.

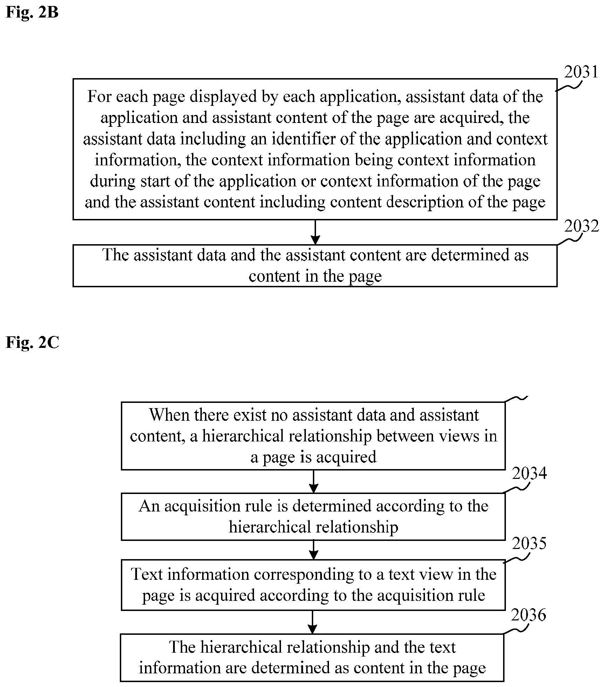

Referring to Fig. 2B, the step that the content in the page displayed by each application in the terminal are acquired includes the following steps.

In Step 2031, for each page displayed by each application, assistant data of the application and assistant content of the page are acquired, the assistant data including an identifier of the application and context information, the context information being context information during start of the application or context information of the page and the assistant content including content description of the page.

Herein, the assistant data and the assistant content are provided by an application developer.

The assistant data includes the identifier of the application and the context information, and the context information includes a class name. If the assistant data is obtained when the application is started, the context information is the context information during start of the application, and the class name is a class name of the application; and if the assistant data is obtained according to the page displayed by the application after the application is started, the context information is the context information of the page, and the class name is a class name of the page. Herein, the assistant data may be AssistData, and at this moment, a type of the assistant data is Bundle.

The assistant content includes the content description of the page, and the content description may include a title, a text or the like, which will not be limited in the embodiment. Herein, the assistant content may be AssistContent, and at this moment, a data format of the assistant content follows a standard defined on schema.org.

When the user opens an application, the intelligent assistant calls an onProvideAssistData interface of the application to notify an Android system of reading AssistData provided by an application developer. In a process of using the application, when the user opens each Activity (page) of the application, the intelligent assistant calls the onProvideAssistData interface and an onProvideAssistContent interface. Herein, the intelligent assistant calls the onProvideAssistData interface to notify the Android system of reading the AssistData provided by the application developer, and the AssistData includes an identifier of the application and context information configured to describe the Activity where the user is located; and the intelligent assistant calls the onProvideAssistContent interface to notify the Android system of reading AssistContent provided by the application developer.

In Step 2032, the assistant data and the assistant content are determined as the content in the page.

When the application developer does not provide the assistant data and the assistant content, the intelligent assistant is required to extract the content from the page, and executes Step 2033-2036; and when the intelligent assistant has acquired the content, Step 204 is executed.

Referring to Fig. 2C, the method provided by the embodiment further includes the following steps.

In Step 2033, when no assistant data or assistant content exists, a hierarchical relationship between views in the page is acquired.

The views may be views in the Activity, and the hierarchical relationship may be WindowNode.

The hierarchical relationship between the views includes a hierarchical relationship displayed in the page and a hierarchical relationship not displayed in the page. The intelligent assistant calls an onProvideStructure interface to notify the Android system of acquiring the hierarchical relationship displayed in WindowNode and calls an onProvideVirtualStructure interface to notify the Android system of acquiring the hierarchical relationship not displayed in WindowNode. Main content of WindowNode is the hierarchical relationship between the views in the Activity.

In Step 2034, an acquisition rule is determined according to the hierarchical relationship.

Different hierarchical relationships correspond to different acquisition rules. For example, when a hierarchical relationship of a Microblog application is determined according to the hierarchical relationship between the views, the acquisition rule is determined as acquiring a few latest blog articles in the page.

In Step 2035, text information corresponding to a text view in the page is acquired according to the acquisition rule.

The text information is text information corresponding to TextView in the Activity. The intelligent assistant calls a createAccessibilityNodelnfo interface to notify the system of acquiring ViewNode, and main content of ViewNode is the text information corresponding to TextView in the application.

In Step 2036, the hierarchical relationship and the text information are determined as the content in the page.

The Android system calls back an onHandleAssist interface to transmit the acquired content to the intelligent assistant, and the intelligent assistant may extract a keyword in the data, and then executes Step 208. At this moment, the content may be AssistData and AssistContent, and may also be ViewNode and WindowNode.

In the embodiment, an Activity mechanism of the Android system is modified to make the onProvideStructure interface, the onProvideVirtualStructure interface and the createAccessibilityNodelnfo interface not called when a home button is pressed for long in the related technology but called in the abovementioned content acquisition process, so that a content acquisition function is realized on the premise of no influence on normal running of the Activity mechanism of the Android system.

In Step 204, an index is created according to the content in all pages displayed by each application, to obtain an index list.

Since the content in the pages displayed by each application in the terminal may reflect the using habit of the user, the intelligent assistant generates the indexes according to the content. Herein, the intelligent assistant generates an index for content in all pages displayed by an application, and at this moment, the index at least includes an identifier of the application, time when each content is acquired, title of each content, descriptions about each content, links where the pages to which each content belongs are started, class names or the like.

For example, when the application is a taxi taking application, the user initiates an operation of taking a taxi to home in the taxi taking application at 9:00 on Monday, and content obtained by the intelligent assistant includes an identifier of the taxi taking application, 9:00, taking a taxi to home, a starting position, a destination position, an icon of the taxi taking application, a link where a page of taking a taxi to home is started, and a class name; the user initiates an operation of taking a taxi to home in the taxi taking application at 10:00 on Tuesday, and content obtained by the intelligent assistant includes the identifier of the taxi taking application, 10:00, taking a taxi to home, a starting position, the destination position, the icon of the taxi taking application, the link where the page of taking a taxi to home is started, and the class name; and then, an index generated by the intelligent assistant for the taxi taking application includes: the identifier of the taxi taking application, (9:00, 10:00), taking a taxi to home, the starting position, the destination position, the icon of the taxi taking application, the link where the page of taking a taxi to home is started, and the class name.

When the index is generated, the intelligent assistant 2. pre-processes data of each content and performs data binning according to a custom interval transmitted by a background server, to achieve a noise reduction effect, wherein pre-processing refers to removing duplicated data. The intelligent assistant stores the pre-processed data in a local sqlite database. Data in the local sqlite database is asynchronously processed through a Jobscehduler interface provided by the Android system. Herein, processing refers to finally determining the corresponding index according to an IF-THEN classification rule in a data mining method and adding the data into the index.

Herein, Steps 203-204 are required to be executed before Step 205, and an execution order of Steps 203-204 and Steps 201 and 202 is not limited in the embodiment.

In Step 205, the index list stored in the terminal is read, the indexes in the index list being created according to the content in the pages displayed by each application in the terminal.

Herein, the index list is generated by Steps 203-204.

In Step 206, it is detected whether there exists an index matched with the parameter in the index list or not.

The intelligent assistant compares the parameter with the text information such as the times, the locations, the titles and the descriptions in the indexes, and when there exists an index in which the text information includes the parameter, the index is determined as the index matched with the parameter, and Step 207 is executed; and when there exists no index in which the text information includes the parameter, it is determined that there exists no index matched with the content, and the flow is ended.

For example, when the parameter is 9:00, the intelligent assistant may search the index list for the index in which the time is matched with 9:00, and when there exists an index in which the time is 8:30-9:30, it is determined that the index is matched with the parameter.

In Step 207, when there exists the index matched with the parameter in the index list, service corresponding to the index is determined.

The intelligent assistant acquires the information in the index and determine the service corresponding to the index. For example, when a theme of the index is a movie, it is determined that the service corresponding to the index is purchasing a movie ticket; when the theme of the index is taking a taxi, it is determined that the service corresponding to the index is taking a taxi; when the theme of the index is a restaurant, it is determined that the service corresponding to the index is group-buying of food or a navigation route to the restaurant; and when the theme of the index is an express, it is determined that the service corresponding to the index is querying express information.

Optionally, when an index includes multiple pieces of information of the same type with the parameter, the intelligent assistant may also detect whether the amount of the information of the same type and matched with the parameter reaches a preset threshold value or not, and when the amount reaches the preset threshold value, it is indicated that the user may frequently behave like this, and the service corresponding to the index is determined; and when the amount does not reach the preset threshold value, it is indicated that the user may occasionally behave like this, and the flow is ended. For example, the user takes a taxi at 9:00 on Monday through the taxi taking application, takes a taxi at 9:00 on Tuesday through the taxi taking application, and takes a taxi at 9:00 on Wednesday through the taxi taking application, then the index corresponding to the taxi taking application includes times 9:00, 9:00 and 9:00, and when the parameter is time and current time is 9:00, the intelligent assistant determines that the index corresponding to the taxi taking application is matched with the parameter, determines the amount of the information matched with the parameter is 3, larger than a preset threshold value 2, and determines the service corresponding to the index at this moment.

In Step 208, it is detected whether there exists a tag corresponding to the service in the preset desktop page or not, Step 209 is executed when there exists the tag corresponding to the service in the preset desktop page, and Step 210 is executed when there exists no tag corresponding to the service in the preset desktop page.

Further, the intelligent assistant also creates tags in the preset desktop page and displays information of each piece of service in each tag, thereby classifying and displaying the service information of each piece of service through the tags for the user to view and process.

Before the information of the service is displayed in the tag, the intelligent assistant is also required to detect whether there exists the tag corresponding to the service in the preset desktop page or not. Herein, a relationship between an identifier of service and an identifier of a tag is pre-stored in the terminal, or, a relationship between an identifier of an application corresponding to service and an identifier of a tag is pre-stored in the terminal. The intelligent assistant determines an identifier of the tag according to the service, and detects whether the tags displayed in the preset desktop page include the tag corresponding to the identifier or not.

Optionally, service of applications of the same type corresponds to the same tag. For example, service of shopping applications corresponds to a tag 1, service of mail applications corresponds to a tag 2, and service of express applications corresponds to a tag 3.

In Step 209, information of the service is displayed in the tag.

For example, the content acquired by the intelligent assistant is express information, the express information is displayed in a tag corresponding to an express in the preset desktop page; and the content acquired by the intelligent assistant is movie information, and the movie information is displayed in a tag corresponding to a movie in the preset desktop page.

In Step 210, a tag is created, and the information of the service is displayed in the created tag.

Further, the intelligent assistant also makes statistics about numbers of identifiers of applications included in the index list and displays the identifiers of the applications in relatively larger numbers in tags of frequently used applications.

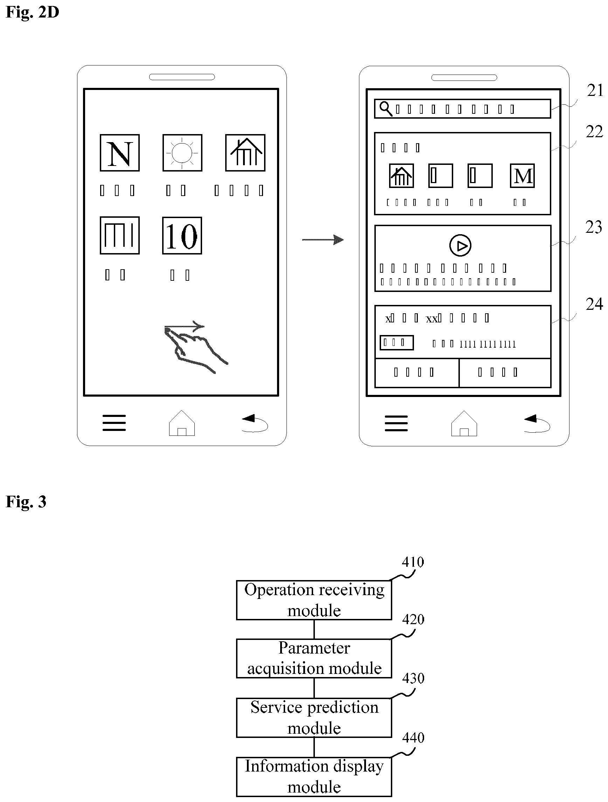

Referring to Fig. 2D, an ordinary desktop page located on a right side of the preset desktop page is displayed by a left-side view. When the user executes a rightward swipe operation, the preset desktop page is displayed, that is, a right-side view is obtained. Herein, in the right-side view, a tag 21 is configured to display a search box, a tag 22 is configured to display frequently used applications, a tag 23 is configured to display television drama information and a tag 24 is configured to display express information.

In a possible implementation scenario, the user in an office takes a taxi to home by using the taxi taking application at 9:00-10:00 every evening and the intelligent assistant records such a behavior of the user every time when the user takes a taxi to home by using the taxi taking application. After a period of time, the intelligent assistant analyzes that the user may use the taxi taking application in the vicinity of the office at 9:00-10:00 every evening, and displays a tag of taking a taxi to home by using the taxi taking application on the preset desktop page. When the user clicks a card, the intelligent assistant directly starts the application, and triggers an operation of taking a taxi to home.

From the above, according to the method for operating a display device provided by the present disclosure, the preset operation configured to indicate the terminal to display the preset desktop page is received; the parameter of the environment where the terminal is located is acquired; the service to be called by the user is predicted according to the parameter; and the information of the service is displayed in the preset desktop page. Therefore, the phenomenon that the same service is continuously recommended to the user stiffly according to a using frequency may be avoided, the service which may be called by the user at this moment may be actively recommended to the user according to a using habit of the user instead, the problem of recommendation inaccuracy of continuous recommendation of the same service to the user according to the using frequency due to the fact that the user may call different service at different times is solved, and an effect of improving accuracy of the recommended service is achieved.

The tags are created in the preset desktop page, and the information of each piece of service is displayed in each tag, so that the service information of each piece of service may be classified and displayed through the tags for the user to view and process.

Fig. 3 is a block diagram illustrating a display device according to an exemplary embodiment. The display device is applied to a terminal, and as shown in Fig. 3, the display device includes: an operation receiving module 310, a parameter acquisition module 320, a service prediction module 330 and an information display module 340.

The operation receiving module 310 is configured to receive a preset operation, the preset operation being configured to indicate the terminal to display a preset desktop page.

The parameter acquisition module 320 is configured to acquire a parameter of an environment where the terminal is located.

The service prediction module 330 is configured to predict service to be called by a user according to the parameter acquired by the parameter acquisition module 320.

The information display module 340 is configured to display information of the service predicted by the service prediction module 330 in the preset desktop page.

From the above, according to the display device provided by the present disclosure, the preset operation configured to indicate the terminal to display the preset desktop page is received; the parameter of the environment where the terminal is located is acquired; the service to be called by the user is predicted according to the parameter; and the information of the service is displayed in the preset desktop page. Therefore, the phenomenon that the same service is continuously recommended to the user stiffly according to a using frequency may be avoided, the service which may be called by the user at this moment may be actively recommended to the user according to a using habit of the user instead, the problem of recommendation inaccuracy of continuous recommendation of the same service to the user according to the using frequency due to the fact that the user may call different service at different times is solved, and an effect of improving accuracy of the recommended service is achieved.

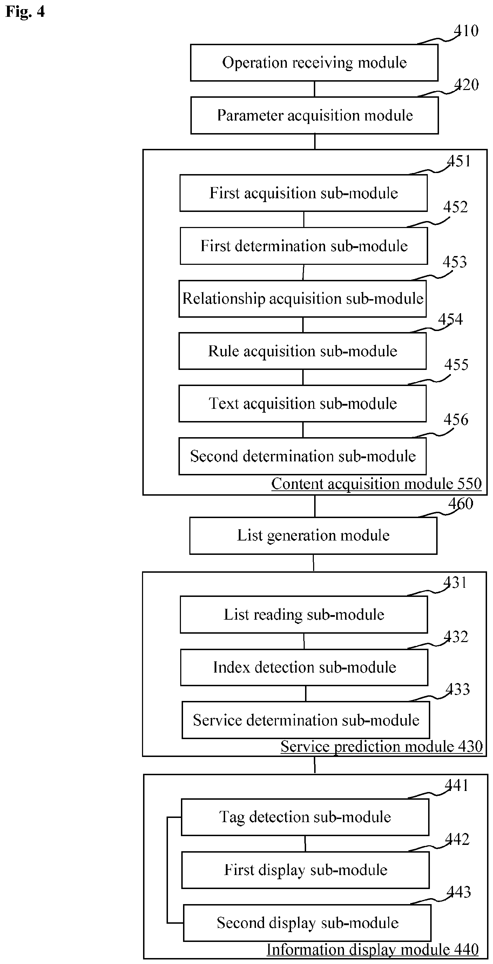

Fig. 4 is a block diagram illustrating a display device according to an exemplary embodiment. The display device is applied to a terminal, and as shown in Fig. 4, the display device includes: an operation receiving module 410, a parameter acquisition module 420, a service prediction module 430 and an information display module 440.

The operation receiving module 410 is configured to receive a preset operation, the preset operation being configured to indicate the terminal to display a preset desktop page.

The parameter acquisition module 420 is configured to acquire a parameter of an environment where the terminal is located.

The service prediction module 430 is configured to predict service to be called by a user according to the parameter obtained by the parameter acquisition module 420.

The information display module 440 is configured to display information of the service predicted by the service prediction module 430 in the preset desktop page.

The service prediction module 430 includes: a list reading sub-module 431, an index detection sub-module 432 and a service determination sub-module 433.

The list reading sub-module 431 is configured to read an index list stored in the terminal, indexes in the index list being created according to content in pages displayed by each application in the terminal.

The index detection sub-module 432 is configured to detect whether there exists an index matched with the parameter in the index list obtained by the list reading sub-module 431 or not.

The service determination sub-module 433 is configured to, when the index detection sub-module 432 detects that there exists the index matched with the parameter in the index list, determine service corresponding to the index.

The device further includes a content acquisition module 450 and a list generation module 460.

The content acquisition module 450 is configured to acquire the content in the pages displayed by each application in the terminal.

The list generation module 460 is configured to create an index according to the content in all pages displayed by each application, to obtain the index list.

The content acquisition module 450 includes a first acquisition sub-module 451 and a first determination sub-module 452.

The first acquisition sub-module 451 is configured to, for each page displayed by each application, acquire assistant data of the application and assistant content of the page, the assistant data including an identifier of the application and context information, the context information being context information during start of the application or context information of the page and the assistant content including content description of the page.

The first determination sub-module 452 is configured to determine the assistant data and assistant content acquired by the first acquisition sub-module 451 as the content in the page.

The content acquisition module 450 further includes a relationship acquisition sub-module 453, a rule acquisition sub-module 454, a text acquisition sub-module 455 and a second determination sub-module 456.

The relationship acquisition sub-module 453 is configured to, when no assistant data or assistant content exist, acquire a hierarchical relationship between views in the page.

The rule acquisition sub-module 454 is configured to determine an acquisition rule according to the hierarchical relationship acquired by the relationship acquisition sub-module 453.

The text acquisition sub-module 455 is configured to acquire text information corresponding to a text view in the page according to the acquisition rule obtained by the rule acquisition sub-module 454.

The second determination sub-module 456 is configured to determine the hierarchical relationship acquired by the relationship acquisition sub-module 453 and the text information acquired by the text acquisition sub-module 455 as the content in the page.

Optionally, the information display module 440 includes a tag detection sub-module 441, a first display sub-module 442 and a second display sub-module 443.

The tag detection sub-module 441 is configured to detect whether there exists a tag corresponding to the service in the preset desktop page or not.

The first display sub-module 442 is configured to, when the tag detection sub-module 441 detects that there exists the tag corresponding to the service in the preset desktop page, display the information of the service in the tag.

The second display sub-module 443 is configured to, when the tag detection sub-module 441 detects that there exists no tag corresponding to the service in the preset desktop page, create a tag, and display the information of the service in the created tag.

From the above, according to the display device provided by the present disclosure, the preset operation configured to indicate the terminal to display the preset desktop page is received; the parameter of the environment where the terminal is located is acquired; the service to be called by the user is predicted according to the parameter; and the information of the service is displayed in the preset desktop page. Therefore, the phenomenon that the same service is continuously recommended to the user stiffly according to a using frequency may be avoided, the service which may be called by the user at this moment may be actively recommended to the user according to a using habit of the user instead, the problem of recommendation inaccuracy of continuous recommendation of the same service to the user according to the using frequency due to the fact that the user may call different service at different times is solved, and an effect of improving accuracy of the recommended service is achieved.

Tags are created in the preset desktop page, and information of each piece of service is displayed in each tag, so that the service information of each piece of service may be classified and displayed through the tags for the user to view and process.

With respect to the devices in the above embodiments, the specific manners for performing operations for individual modules therein have been described in detail in the embodiments regarding the methods, which will not be elaborated herein.

The embodiment of the present disclosure provides a display device, which implements a method for operating a display device provided by the present disclosure, the display device including: a processor and a memory configured to store instructions executable by the processor.

The processor is configured to:
receive a preset operation, the preset operation being configured to indicate a terminal to display a preset desktop page;
acquire a parameter of an environment where the terminal is located;
predict service to be called by a user according to the parameter; and
display information of the service in the preset desktop page.

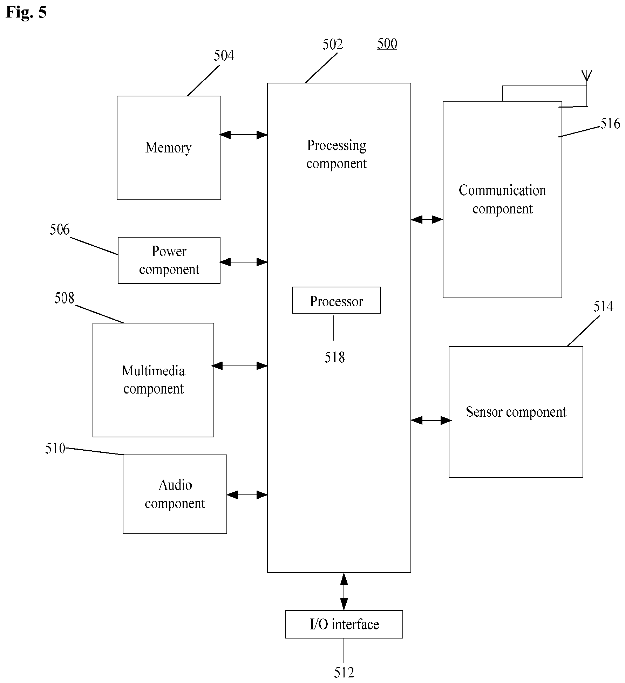

Fig. 5 is a block diagram illustrating a display device 500 according to an exemplary embodiment. For example, the device 500 may be a mobile phone, a computer, a digital broadcast terminal, a messaging device, a gaming console, a tablet, a medical device, exercise equipment, a personal digital assistant or the like.

Referring to Fig. 5, the device 500 may include one or more of the following components: a processing component 502, a memory 504, a power component 506, a multimedia component 508, an audio component 510, an Input/Output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 518 to execute instructions to perform all or part of the steps in the abovementioned method. Moreover, the processing component 502 may include one or more modules which facilitate interaction between the processing component 502 and the other components. For instance, the processing component 502 may include a multimedia module to facilitate interaction between the multimedia component 508 and the processing component 502.

The memory 504 is configured to store various types of data to support the operation of the device 500. Examples of such data include instructions for any application programs or methods operated on the device 500, contact data, phonebook data, messages, pictures, video, etc. The memory 504 may be implemented by any type of volatile or nonvolatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 506 provides power for various components of the device 500. The power component 506 may include a power management system, one or more power supplies, and other components associated with the generation, management and distribution of power for the device 500.

The multimedia component 508 includes a screen providing an output interface between the device 500 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 508 includes a front camera and/or a rear camera. The front camera and/or the rear camera may receive external multimedia data when the device 500 is in an operation mode, such as a photographing mode or a video mode. Each of the front camera and the rear camera may be a fixed optical lens system or have focusing and optical zooming capabilities.

The audio component 510 is configured to output and/or input an audio signal. For example, the audio component 510 includes a Microphone (MIC), and the MIC is configured to receive an external audio signal when the device 500 is in the operation mode, such as a call mode, a recording mode and a voice recognition mode. The received audio signal may be further stored in the memory 504 or sent through the communication component 516. In some embodiments, the audio component 510 further includes a speaker configured to output the audio signal.

The I/O interface 512 provides an interface between the processing component 502 and a peripheral interface module, and the peripheral interface module may be a keyboard, a click wheel, a button or the like. The button may include, but not limited to: a home button, a volume button, a starting button and a locking button.

The sensor component 514 includes one or more sensors configured to provide status assessment in various aspects for the device 500. For instance, the sensor component 514 may detect an on/off status of the device 500 and relative positioning of components, such as a display and small keyboard of the device 500, and the sensor component 514 may further detect a change in a position of the device 500 or a component of the device 500, presence or absence of contact between the user and the device 500, orientation or acceleration/deceleration of the device 500 and a change in temperature of the device 500. The sensor component 514 may include a proximity sensor configured to detect presence of an object nearby without any physical contact. The sensor component 514 may also include a light sensor, such as a Complementary Metal Oxide Semiconductor (CMOS) or Charge Coupled Device (CCD) image sensor, configured for use in an imaging application. In some embodiments, the sensor component 514 may also include an acceleration sensor, a gyroscope sensor, a magnetic sensor, a pressure sensor or a temperature sensor.

The communication component 516 is configured to facilitate wired or wireless communication between the device 500 and another device. The device 500 may access a communication-standard-based wireless network, such as a Wireless Fidelity (WiFi) network, a 2nd-Generation (2G) or 3rd-Generation (3G) network or a combination thereof. In an exemplary embodiment, the communication component 516 receives a broadcast signal or broadcast associated information from an external broadcast management system through a broadcast channel. In an exemplary embodiment, the communication component 516 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BlueTooth (BT) technology and another technology.

In an exemplary embodiment, the device 500 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method.

In an exemplary embodiment, there is also provided a non-transitory computer-readable storage medium including an instruction, such as the memory 504 including an instruction, and the instruction may be executed by the processor 518 of the device 500 to implement the abovementioned method. For example, the non-transitory computer-readable storage medium may be a ROM, a Radom Access Memory (RAM), a Compact Disc Read-Only Memory (CD-ROM), a magnetic tape, a floppy disc, an optical data storage device or the like.

Other embodiments of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. An information display method, the method being performed by a
terminal operated in Android system and the method comprises:
receiving (101) a preset operation, the preset operation being configured to indicate the terminal to display a preset desktop page;
acquiring (102) a parameter of an environment where the terminal is located;
acquiring (203) content in pages displayed by each application in the terminal, comprising:
for each page displayed by each application, acquiring (2031) assistant data of the application and assistant content of the page, the assistant data comprising an identifier of the application and context information, the context information being context information during start of the application or context information of the page and the assistant content comprising content description of the page, wherein the assistant data is acquired by the terminal operated in Android system through calling onProvideAssistData interface and the assistant content is acquired by the terminal operated in Android system through calling onProvideAssistContent interface;
determining (2032) the assistant data and the assistant content as the content in the page;
when no assistant data or assistant content exist, acquiring (2033) a hierarchical relationship between views in the page, wherein the hierarchical relationship comprises a hierarchical relationship displayed in the page and a hierarchical relationship not displayed in the page, the hierarchical relationship displayed in the page is acquired by the terminal operated in Android system through calling an onProvideStructure interface and the hierarchical relationship not displayed in the page is acquired by the terminal operated in Android system through calling an onProvideVirtualStructure interface;
determining (2034) an acquisition rule according to the hierarchical relationship;
acquiring (2035) text information corresponding to a text view in the page according to the acquisition rule, wherein the text information is acquired by the terminal operated in Android system through calling a createAccessibilityNodeInfo interface; and
determining (2036) the hierarchical relationship and the text information as the content in the page;
creating (204) an index according to the content in all pages displayed by each application, to obtain an index list;
predicting (103) service to be called by a user according to the parameter, comprising:
reading (205) the index list stored in the terminal, wherein the index comprises an identifier of the application, time when each content is acquired, title of each content, descriptions about each content, links where pages to which each content belongs are started, and class name;
detecting (206) whether there exists an index matched with the parameter in the index list or not; and
when there exists the index matched with the parameter in the index list,
determining (207) service corresponding to the index;
detecting (208) whether there exists a tag corresponding to the service in the preset desktop page or not, wherein a relationship between an identifier of a service and an identifier of a tag is pre-stored in the terminal;
when there exists the tag corresponding to the service in the preset desktop page, displaying (209) the information of the service in the tag;
when there exists no tag corresponding to the service in the preset desktop page, creating (210) a tag, and displaying the information of the service in the created tag.

2. The method according to claim 1, wherein
when the index is generated, pre-processing is performed on data of each content and data binning is performed according to a custom interval transmitted by a background server, wherein the pre-processing is removing duplicated data.

3. The method according to claim 2, wherein
the pre-processed data is stored in a local sqlite database, and is asynchronously processed through a Jobscehduler interface provided by the Android system.

4. An information display device, the device being applied in a terminal operated in Android system and the device comprises:
an operation receiving module (410), configured to receive a preset operation, the preset operation being configured to indicate the terminal to display a preset desktop page;
a parameter acquisition module (420), configured to acquire a parameter of an environment where the terminal is located;
a content acquisition module (550), configured to acquire content in pages displayed by each application in the terminal;
a list generation module (460), configured to create an index according to the content in all pages displayed by each application, to obtain an index list;
a service prediction module (430), configured to predict service to be called by a user according to the parameter acquired by the parameter acquisition module; and
an information display module (440), configured to display information of the service predicted by the service prediction module in the preset desktop page;
wherein the information display module (440) comprises:
a tag detection sub-module (441), configured to detect whether there exists a tag corresponding to the service in the preset desktop page or not, wherein a relationship between an identifier of a service and an identifier of a tag is pre-stored in the terminal;
a first display sub-module (442), configured to, when the tag detection sub-module detects that there exists the tag corresponding to the service in the preset desktop page, display the information of the service in the tag; and
a second display sub-module (443), configured to, when the tag detection sub-module detects that there exists no tag corresponding to the service in the preset desktop page, create a tag, and display the information of the service in the created tag;
wherein the service prediction module (430) comprises:
a list reading sub-module (431), configured to read the index list stored in the terminal, wherein the index comprises an identifier of the application, time when each content is acquired, title of each content, descriptions about each content, links where pages to which each content belongs are started, and class name;
an index detection sub-module (432), configured to detect whether there exists an index matched with the parameter in the index list obtained by the list reading sub-module or not; and
a service determination sub-module (433), configured to, when the index detection sub-module detects that there exists the index matched with the parameter in the index list, determine service corresponding to the index,
wherein the content acquisition module (550) comprises:
a first acquisition sub-module (451), configured to, for each page displayed by each application, acquire assistant data of the application and assistant content of the page, the assistant data comprising an identifier of the application and context information, the context information being context information during start of the application or context information of the page and the assistant content comprising content description of the page, wherein the assistant data is acquired by the terminal operated in Android system through calling onProvideAssistData interface and the assistant content is acquired by the terminal operated in Android system through calling onProvideAssistContent interface;
a first determination sub-module (452), configured to determine the assistant data and assistant content obtained by the first acquisition sub-module as the content in the page;
a relationship acquisition sub-module (453), configured to, when no assistant data or assistant content exist, acquire a hierarchical relationship between views in the page, wherein the hierarchical relationship comprises a hierarchical relationship displayed in the page and a hierarchical relationship not displayed in the page, the hierarchical relationship displayed in the page is acquired by the terminal operated in Android system through calling an onProvideStructure interface and the hierarchical relationship not displayed in the page is acquired by the terminal operated in Android system through calling an onProvideVirtualStructure interface;
a rule acquisition sub-module (454), configured to determine an acquisition rule according to the hierarchical relationship acquired by the relationship acquisition sub-module;
a text acquisition sub-module (455), configured to acquire text information corresponding to a text view in the page according to the acquisition rule obtained by the rule acquisition sub-module, wherein the text information is acquired by the terminal operated in Android system through calling a createAccessibilityNodeInfo interface; and
a second determination sub-module (456), configured to determine the hierarchical relationship acquired by the relationship acquisition sub-module and the text information acquired by the text acquisition sub-module as the content in the page.

5. The device according to claim 4, wherein when the index is generated, pre-processing is performed on data of each content and data binning is performed according to a custom interval transmitted by a background server, wherein the pre-processing is removing duplicated data.

6. The device according to claim 5, wherein
the pre-processed data is stored in a local sqlite database, and is asynchronously processed through a Jobscehduler interface provided by the Android system.

7. A computer program including instructions for executing the steps of an information display method according to any one of claims 1 to 3 when said program is executed by a computer.

8. A recording medium readable by a computer and having recorded thereon a computer program including instructions for executing the steps of an information display method according to any one of claims 1 to 3.

## Patentansprüche

1. Informationsanzeigeverfahren, wobei das Verfahren von einem Endgerät durchgeführt wird, das im Android-System betrieben wird, und wobei das Verfahren umfasst:
Empfangen (101) einer vorbestimmten Operation, wobei die vorbestimmte Operation dazu dient, das Endgerät darauf hinzuweisen, eine vorbestimmte Desktop-Seite anzuzeigen;
Erfassen (102) eines Parameters einer Umgebung, in der sich das Endgerät befindet;
Erfassen (203) von Inhalten auf Seiten, die von jeder Anwendung auf dem Endgerät angezeigt werden, was umfasst:
für jede Seite, die von jeder Anwendung angezeigt wird, Erfassen (2031) von Assistenzdaten der Anwendung und Assistenzinhalten der Seite, wobei die Assistenzdaten eine Kennung der Anwendung und Kontextinformationen umfassen, wobei die Kontextinformationen die Kontextinformationen während des Starts der Anwendung oder Kontextinformationen der Seite sind und die Assistenzinhalte eine Inhaltsbeschreibung der Seite umfassen, wobei die Assistenzdaten von dem im Android-System betriebenen Endgerät durch Aufrufen einer onProvideAssistData-Schnittstelle erfasst werden, und die Assistenzinhalte von dem im Android-System betriebenen Endgerät durch Aufrufen einer onProvideAssistContent-Schnittstelle erfasst werden;
Bestimmen (2032) der Assistenzdaten und der Assistenzinhalte als Inhalte auf der Seite;
wenn keine Assistenzdaten oder Assistenzinhalte vorhanden sind, Erfassen (2033) einer hierarchischen Beziehung zwischen Ansichten auf der Seite, wobei die hierarchische Beziehung eine hierarchische Beziehung umfasst, die auf der Seite angezeigt wird, und eine hierarchische Beziehung umfasst, die nicht auf der Seite angezeigt wird, wobei die auf der Seite angezeigte hierarchische Beziehung von dem im Android-System betriebenen Endgerät durch Aufrufen einer onProvideStructure-Schnittstelle erfasst wird, und die nicht auf der Seite angezeigte hierarchische Beziehung von dem im Android-System betriebenen Endgerät durch Aufrufen einer onProvideVirtualStructure-Schnittstelle erfasst wird;
Bestimmen (20234) einer Erfassungsregel entsprechend der hierarchischen Beziehung;
Erfassen (2035) von Textinformationen, die einer Textansicht auf der Seite entsprechend, entsprechend der Erfassungsregel, wobei die Textinformationen von dem im Android-System betriebenen Endgerät durch Aufrufen einer createAccessibilityNodeInfo-Schnittstelle erfasst werden; und
Bestimmen (2036) der hierarchischen Beziehung und der Textinformationen als die Inhalte auf der Seite;
Erstellen (204) eines Index entsprechend den Inhalten auf allen Seiten, die von jeder Anwendung angezeigt werden, um eine Indexliste zu erhalten;
Vorhersagen (103) eines von einem Benutzer aufzurufenden Dienstes entsprechend dem Parameter, was umfasst:
Lesen (205) der auf dem Endgerät gespeicherten Indexliste, wobei der Index eine Kennung der Anwendung, die Zeit, zu der jeder Inhalt erfasst wird, den Titel jedes Inhalts, Beschreibungen zu jedem Inhalt, Links, über die Seiten,
zu denen jeder Inhalt gehört, aufgerufen werden, und den Klassennamen umfasst;
Detektieren (206), ob ein mit dem Parameter übereinstimmender Index in der Indexliste vorhanden ist oder nicht; und
wenn der mit dem Parameter übereinstimmender Index in der Indexliste vorhanden ist, Bestimmen (207) eines dem Index entsprechenden Dienstes;
Detektieren (208), ob ein dem Dienst auf der vorbestimmten Desktop-Seite entsprechender Tag vorhanden ist oder nicht, wobei eine Beziehung zwischen einer Kennung eines Dienstes und einer Kennung eines Tags in dem Endgerät vorgespeichert ist;
wenn der dem Dienst auf der vorbestimmten Desktop-Seite entsprechende Tag vorhanden ist, Anzeigen (209) der Informationen des Dienstes in dem Tag;
wenn kein dem Dienst auf der vorbestimmten Desktop-Seite entsprechender Tag vorhanden ist, Erstellen (210) eines Tags und Anzeigen der Informationen des Dienstes in dem erstellten Tag.

2. Verfahren nach Anspruch 1, wobei bei Erzeugung des Index eine Vorverarbeitung der Daten jedes Inhalts und eine Klassenteilung entsprechend einem von einem Hintergrundserver übertragenen benutzerdefinierten Intervall durchgeführt wird, wobei die Vorverarbeitung doppelte Daten entfernt.

3. Verfahren nach Anspruch 2, wobei die vorverarbeiteten Daten in einer lokalen SQLite-Datenbank gespeichert und asynchron über eine von dem Android-System bereitgestellte JobScheduler-Schnittstelle verarbeitet werden.

4. Informationsanzeigevorrichtung, wobei die Vorrichtung bei einem Endgerät eingesetzt wird, die im Android-System betrieben wird, und wobei die Vorrichtung aufweist:
ein Operationsempfangsmodul (410), das dazu ausgebildet ist, eine vorbestimmte Operation zu empfangen, wobei die vorbestimmte Operation dazu dient, das Endgerät darauf hinzuweisen, eine vorbestimmte Desktop-Seite anzuzeigen;
ein Parametererfassungsmodul (420), das dazu ausgebildet ist, einen Parameter einer Umgebung zu erfassen, in der sich das Endgerät befindet;
ein Inhaltserfassungsmodul (550), das dazu ausgebildet ist, Inhalte auf Seiten zu erfassen, die von jeder Anwendung auf dem Endgerät angezeigt werden;
ein Listenerzeugungsmodul (460), das dazu ausgebildet ist, einen Index entsprechend den Inhalten auf sämtlichen Seite zu erstellen, die von jeder Anwendung angezeigt werden, um eine Indexliste zu erhalten;
ein Dienstvorhersagemodul (430), das dazu ausgebildet ist, einen von einem Benutzer aufzurufenden Dienst entsprechend dem Parameter vorherzusagen, der von dem Parametererfassungsmodul erfasst wird; und
ein Informationsanzeigemodul (440), das dazu ausgebildet ist, Informationen des von dem Dienstvorhersagemodul vorhergesagten Dienstes auf der vorbestimmten Desktop-Seite anzuzeigen;
wobei das Informationsanzeigemodul (440) aufweist:
ein Tag-Detektionssubmodul (441), das dazu ausgebildet ist, zu detektieren, ob ein dem Dienst auf der vorbestimmten Desktop-Seite entsprechender Tag vorhanden ist oder nicht, wobei eine Beziehung zwischen einer Kennung eines Dienstes und einer Kennung eines Tags in dem Endgerät vorgespeichert ist; ein erstes Anzeigesubmodul (442), das dazu ausgebildet ist, wenn das Tag-Detektionssubmodul detektiert, dass der dem Dienst auf der vorbestimmten Desktop-Seite entsprechende Tag vorhanden ist, die Informationen des Dienstes in dem Tag anzuzeigen; und
ein zweites Anzeigesubmodul (443), das dazu ausgebildet ist, wenn das Tag-Detektionssubmodul detektiert, dass kein dem Dienst auf der vorbestimmten Desktop-Seite entsprechender Tag vorhanden ist, einen Tag zu erstellen und die Informationen des Dienstes in dem erstellten Tag anzuzeigen;
wobei das Dienstvorhersagemodul (430) aufweist:
ein Listenlesesubmodul (431), das dazu ausgebildet ist, die auf dem Endgerät gespeicherte Indexliste zu lesen, wobei der Index eine Kennung der Anwendung, die Zeit, zu der jeder Inhalt erfasst wird, den Titel jedes Inhalts, Beschreibungen zu jedem Inhalt, Links, über die Seiten, zu denen jeder Inhalt gehört, aufgerufen werden, und den Klassennamen umfasst;
ein Indexdetektionssubmodul (432), das dazu ausgebildet ist, zu detektieren, ob ein mit dem Parameter übereinstimmender Index in der von dem Listenlesesubmodul erfassten Indexliste vorhanden ist oder nicht; und
ein Dienstbestimmungssubmodul (433), das dazu ausgebildet ist, wenn das Indexdetektionssubmodul detektiert, dass der mit dem Parameter übereinstimmende Index in der Indexliste vorhanden ist, einen dem Index entsprechenden Dienst zu bestimmen,
wobei das Inhaltserfassungsmodul (550) aufweist:
ein erstes Erfassungssubmodul (451), das dazu ausgebildet ist, für jede Seite, die von jeder Anwendung angezeigt wird, Assistenzdaten der Anwendung und Assistenzinhalte der Seite zu erfassen, wobei die Assistenzdaten eine Kennung der Anwendung und Kontextinformationen umfassen, wobei die Kontextinformationen die Kontextinformationen während des Starts der Anwendung oder Kontextinformationen der Seite sind und die Assistenzinhalte eine Inhaltsbeschreibung der Seite umfassen, wobei die Assistenzdaten von dem im Android-System betriebenen Endgerät durch Aufrufen einer onProvideAssistData-Schnittstelle erfasst werden, und die Assistenzinhalte von dem im Android-System betriebenen Endgerät durch Aufrufen einer onProvideAssistContent-Schnittstelle erfasst werden;
ein erstes Bestimmungssubmodul (452), das dazu ausgebildet ist, die Assistenzdaten und die Assistenzinhalte zu bestimmen, die von dem ersten Erfassungssubmodul als die Inhalte auf der Seite erhalten werden;
ein Beziehungserfassungssubmodul (453), das dazu ausgebildet ist, wenn keine Assistenzdaten oder Assistenzinhalte vorhanden sind, eine hierarchische Beziehung zwischen Ansichten auf der Seite zu erfassen, wobei die hierarchische Beziehung eine hierarchische Beziehung umfasst, die auf der Seite angezeigt wird, und eine hierarchische Beziehung umfasst, die nicht auf der Seite angezeigt wird, wobei die auf der Seite angezeigte hierarchische Beziehung von dem im Android-System betriebenen Endgerät durch Aufrufen einer onProvideStructure-Schnittstelle erfasst wird, und die nicht auf der Seite angezeigte hierarchische Beziehung von dem im Android-System betriebenen Endgerät durch Aufrufen einer onProvideVirtualStructure-Schnittstelle erfasst wird;
ein Regelerfassungssubmodul (454), das dazu ausgebildet ist, eine Erfassungsregel entsprechend der hierarchischen Beziehung zu bestimmen, die von dem Beziehungserfassungssubmodul erfasst wird;
ein Texterfassungssubmodul (455), das dazu ausgebildet ist, Textinformationen, die einer Textansicht auf der Seite entsprechen, entsprechend der Erfassungsregel zu erfassen, die von dem Regelerfassungssubmodul erhalten wird, wobei die Textinformationen von dem im Android-System betriebenen Endgerät durch Aufrufen einer createAccessibilityNodeInfo-Schnittstelle erfasst werden; und
ein zweites Bestimmungssubmodul (456), das dazu ausgebildet ist, die hierarchische Beziehung, die von dem Beziehungserfassungssubmodul erfasst wird, und die Textinformationen, die von dem Texterfassungssubmodul erfasst werden, als Inhalte auf der Seite zu bestimmen.

5. Vorrichtung nach Anspruch 4, wobei bei Erzeugung des Index eine Vorverarbeitung der Daten jedes Inhalts und eine Klassenteilung entsprechend einem von einem Hintergrundserver übertragenen benutzerdefinierten Intervall durchgeführt wird, wobei die Vorverarbeitung doppelte Daten entfernt.

6. Verfahren nach Anspruch 5, wobei die vorverarbeiteten Daten in einer lokalen SQLite-Datenbank gespeichert und asynchron über eine von dem Android-System bereitgestellte JobScheduler-Schnittstelle verarbeitet werden.

7. Computerprogramm, das Anweisungen zur Ausführung der Schritte eines Informationsanzeigeverfahrens nach einem der Ansprüche 1 bis 3 umfasst, wenn das Programm von einem Computer ausgeführt wird.

8. Aufzeichnungsmedium, das von einem Computer gelesen werden kann und auf dem ein Computerprogramm aufgezeichnet ist, das Anweisungen zur Ausführung der Schritte eines Informationsanzeigeverfahrens nach einem der Ansprüche 1 bis 3 umfasst.

## Revendications

1. Procédé d'affichage d'informations, le procédé étant effectué par un terminal exploité dans un système Android et le procédé comprend :
la réception (101) d'une opération prédéfinie, l'opération prédéfinie étant configurée pour indiquer au terminal d'afficher une page de bureau prédéfinie ;
l'acquisition (102) d'un paramètre de l'environnement où se trouve le terminal ;
l'acquisition (203) du contenu des pages affichées par chaque application du terminal, comprenant :
pour chaque page affichée par chaque application, l'acquisition (2031) des données d'assistant de l'application et du contenu d'assistant de la page, les données d'assistant comprenant un identifiant de l'application et des informations de contexte, les informations de contexte étant des informations de contexte pendant le démarrage de l'application ou des informations de contexte de la page et le contenu d'assistant comprenant une description du contenu de la page, dans lequel les données d'assistant sont acquises par le terminal exploité dans le système Android en appelant l'interface onProvideAssistData et le contenu d'assistant est acquis par le terminal exploité dans le système Android en appelant l'interface onProvideAssistContent ;
la détermination (2032) des données d'assistant et du contenu d'assistant en tant que contenu de la page ;
lorsqu'il n'existe pas de données d'assistant ou de contenu d'assistant, l'acquisition (2033) d'une relation hiérarchique entre les vues dans la page, dans lequel la relation hiérarchique comprend une relation hiérarchique affichée dans la page et une relation hiérarchique non affichée dans la page, la relation hiérarchique affichée dans la page est acquise par le terminal exploité dans le système Android par l'appel d'une interface onProvideStructure et la relation hiérarchique non affichée dans la page est acquise par le terminal exploité dans le système Android par l'appel d'une interface onProvide Virtual Structure ;
la détermination (2034) d'une règle d'acquisition selon la relation hiérarchique ;
l'acquisition (2035) d'informations textuelles correspondant à une vue de texte dans la page selon la règle d'acquisition, dans lequel les informations textuelles sont acquises par le terminal exploité dans le système Android par l'appel d'une interface createAccessibilityNodelnfo ; et
la détermination (2036) de la relation hiérarchique et des informations textuelles en tant que contenu de la page ;
la création (204) d'un index selon le contenu de toutes les pages affichées par chaque application, afin d'obtenir une liste d'index ;
la prédiction (103) du service à appeler par un utilisateur selon le paramètre, comprenant :
la lecture (205) de la liste d'index stockée dans le terminal, dans lequel l'index comprend un identifiant de l'application, l'heure à laquelle chaque contenu est acquis, le titre de chaque contenu, les descriptions de chaque contenu, les liens permettant de démarrer les pages auxquelles chaque contenu appartient, et le nom de la classe ;
la détection (206) de l'existence ou non d'un index correspondant au paramètre dans la liste d'index ; et
lorsqu'il existe un index correspondant au paramètre dans la liste d'index, la détermination (207) du service correspondant à l'index ;
la détection (208) de l'existence ou non d'une étiquette correspondant au service dans la page de bureau prédéfinie, dans lequel une relation entre l'identifiant d'un service et l'identifiant d'une étiquette est préenregistrée dans le terminal ;
lorsqu'il existe une étiquette correspondant au service dans la page de bureau prédéfinie, l'affichage (209) des informations relatives au service dans l'étiquette ;
lorsqu'il n'existe pas d'étiquette correspondant au service dans la page de bureau prédéfinie, la création (210) d'une étiquette et l'affichage des informations relatives au service dans l'étiquette créée.

2. Procédé selon la revendication 1, dans lequel,
lorsque l'index est généré, un prétraitement est effectué sur les données de chaque contenu et la classification des données est effectuée selon un intervalle personnalisé transmis par un serveur d'arrière-plan, dans lequel le prétraitement consiste à supprimer les données dupliquées.

3. Procédé selon la revendication 2, dans lequel
les données prétraitées sont stockées dans une base de données sqlite locale et sont traitées de manière asynchrone par l'intermédiaire d'une interface Jobscheduler fournie par le système Android.

4. Dispositif d'affichage d'informations, le dispositif étant appliqué dans un terminal exploité dans un système Android et le dispositif comprend :
un module de réception d'opération (410), configuré pour recevoir une opération prédéfinie, l'opération prédéfinie étant configurée pour indiquer au terminal d'afficher une page de bureau prédéfinie ;
un module d'acquisition de paramètre (420), configuré pour acquérir un paramètre d'un environnement où se trouve le terminal ;
un module d'acquisition de contenu (550), configuré pour acquérir le contenu des pages affichées par chaque application du terminal ;
un module de génération de liste (460), configuré pour créer un index selon le contenu de toutes les pages affichées par chaque application, afin d'obtenir une liste d'index ;
un module de prédiction de service (430), configuré pour prédire le service à appeler par un utilisateur selon le paramètre acquis par le module d'acquisition de paramètre ; et
un module d'affichage d'informations (440), configuré pour afficher des informations relatives au service prédit par le module de prédiction de service dans la page de bureau prédéfinie ;
dans lequel le module d'affichage d'informations (440) comprend :
un sous-module de détection d'étiquette (441), configuré pour détecter s'il existe ou non une étiquette correspondant au service dans la page de bureau prédéfinie, dans lequel une relation entre l'identifiant d'un service et l'identifiant d'une étiquette est préenregistrée dans le terminal ;
un premier sous-module d'affichage (442), configuré pour, lorsque le sous-module de détection d'étiquette détecte qu'il existe une étiquette correspondant au service dans la page de bureau prédéfinie, afficher les informations relatives au service dans l'étiquette ; et
un second sous-module d'affichage (443), configuré pour, lorsque le sous-module de détection d'étiquette détecte qu'il n'existe pas d'étiquette correspondant au service dans la page de bureau prédéfinie, créer une étiquette et afficher les informations relatives au service dans l'étiquette créée ;
dans lequel le module de prédiction de service (430) comprend :
un sous-module de lecture de liste (431), configuré pour lire la liste d'index stockée dans le terminal, dans lequel l'index comprend un identifiant de l'application, l'heure à laquelle chaque contenu est acquis, le titre de chaque contenu, les descriptions de chaque contenu, les liens permettant de démarrer les pages auxquelles chaque contenu appartient, et le nom de la classe ;
un sous-module de détection d'index (432), configuré pour détecter s'il existe ou non un index correspondant au paramètre dans la liste d'index obtenue par le sous-module de lecture de liste ; et
un sous-module de détermination de service (433), configuré pour, lorsque le sous-module de détection d'index détecte qu'il existe un index correspondant au paramètre dans la liste d'index, déterminer le service correspondant à l'index,
dans lequel le second module de détermination (550) comprend :
un premier sous-module d'acquisition (451), configuré pour, pour chaque page affichée par chaque application, acquérir les données d'assistant de l'application et le contenu d'assistant de la page, les données d'assistant comprenant un identifiant de l'application et des informations de contexte, les informations de contexte étant des informations de contexte pendant le démarrage de l'application ou des informations de contexte de la page et le contenu d'assistant comprenant une description du contenu de la page, dans lequel les données d'assistant sont acquises par le terminal exploité dans le système Android en appelant l'interface onProvideAssistData et le contenu d'assistant est acquis par le terminal exploité dans le système Android en appelant l'interface onProvideAssistContent ;
un premier sous-module de détermination (452), configuré pour déterminer les données d'assistant et le contenu d'assistant obtenus par le premier sous-module d'acquisition comme étant le contenu de la page ;
un sous-module d'acquisition de relation (453), configuré pour, lorsqu'il n'existe pas de données d'assistant ou de contenu d'assistant, acquérir une relation hiérarchique entre les vues dans la page, dans lequel la relation hiérarchique comprend une relation hiérarchique affichée dans la page et une relation hiérarchique non affichée dans la page, la relation hiérarchique affichée dans la page est acquise par le terminal exploité dans le système Android par l'appel d'une interface onProvideStructure et la relation hiérarchique non affichée dans la page est acquise par le terminal exploité dans le système Android par l'appel d'une interface onProvide Virtual Structure ;
un sous-module d'acquisition de règle (454), configuré pour déterminer une règle d'acquisition selon la relation hiérarchique acquise par le sous-module d'acquisition de relation ;
un sous-module d'acquisition de texte (455), configuré pour acquérir des informations textuelles correspondant à une vue de texte dans la page selon la règle d'acquisition obtenue par le sous-module d'acquisition de règle, dans lequel les informations textuelles sont acquises par le terminal exploité dans le système Android par l'appel d'une interface createAccessibilityNodelnfo ; et
un second sous-module de détermination (456), configuré pour déterminer la relation hiérarchique acquise par le sous-module d'acquisition de relation et les informations textuelles acquises par le sous-module d'acquisition de texte en tant que contenu de la page.

5. Dispositif selon la revendication 4, dans lequel, lorsque l'index est généré, un prétraitement est effectué sur les données de chaque contenu et la classification des données est effectuée selon un intervalle personnalisé transmis par un serveur d'arrière-plan, dans lequel le prétraitement consistant à supprimer les données dupliquées.

6. Procédé selon la revendication 5, dans lequel
les données prétraitées sont stockées dans une base de données sqlite locale et sont traitées de manière asynchrone par l'intermédiaire d'une interface Jobscheduler fournie par le système Android.

7. Programme informatique comportant des instructions destinées à l'exécution des étapes d'un procédé d'affichage d'informations selon l'une quelconque des revendications 1 à 3, lorsque ledit programme est exécuté par un ordinateur.

8. Support d'enregistrement lisible par un ordinateur et sur lequel est enregistré un programme informatique comportant des instructions pour exécuter les étapes d'un procédé d'affichage d'informations selon l'une quelconque des revendications 1 à 3.
